# EUROPÄISCHE PATENTSCHRIFT

(11) **EP 1 512 726 B1**
(45) Veröffentlichungstag und Bekanntmachung des Hinweises auf die Patenterteilung: **14.10.2015**
(21) Anmeldenummer: 04019673.5
(22) Anmeldetag: 19.08.2004
(51) Int. Cl.: C09C 1/24, C01G 49/06

(54) **VERFAHREN ZUR HERSTELLUNG VON EISENOXIDGELBPIGMENTEN MIT CACO3 ALS FÄLLUNGSMITTEL**
PROCESS FOR PRECITATING YELLOW IRON OXIDE PIGMENTS USING CACO3 AS PRECIPITATING AGENT
PROCÉDÉ DE PRÉCIPITATION DE PIGMENT JAUNE D'OXYDE DE FER UTILISANT DU CACO3 COMME AGENT DE PRÉCIPITATION

(30) Priorität: 03.09.2003 DE 10340501; 28.10.2003 DE 10350278
(43) Veröffentlichungstag der Anmeldung: 09.03.2005
(73) Patentinhaber: LANXESS Deutschland GmbH, 50569 Köln (DE)
(72) Erfinder: Meisen, Ulrich, Dr., 53925 Kall (DE); Brunn, Horst, Dr., 40668 Meerbusch (DE); van Bonn, Karl-Heinz, Dr., 46519 Alpen (DE); Friedrich, Holger, Dr., 47798 Krefeld (DE)

(56) Entgegenhaltungen:
- WO-A1-02/20673
- WO-A1-02/20675
- WO-A1-02/26633
- DE-A1- 19 746 263

## Beschreibung

Die vorliegende Erfindung betrifft Eisenoxidgelbpigmente sowie ein Verfahren zu deren Herstellung nach dem Fällungsverfahren aus den Rohstoffen Einsen(II)-chlorid oder Eisen(II)-sulfat und Calciumcarbonat und/oder Dolomit als Fällungsmittel, sowie deren Verwendung als Farbmittel und heterogene Katalysatoren.

Das Fällverfahren zur Herstellung von Eisenoxidgelpigmenten ist seit langem bekannt. Die praktische Durchführung dieses Verfahrens ist beispielsweise in Ullmann's Encyclopedia of Industrial Chemistry, 5th Ed., Vol A20, S. 297 ff. beschrieben. Als Rohstoff wird gewöhnlich Eisen(II)-sulfat, das beim Abbeizen von Stahlblechen oder bei der Produktion von Titandioxid nach dem Sulfatverfahren anfällt, verwendet.

In der Beizerei-Industrie ist jedoch seit Jahren ein verstärkter Trend zum Einsatz von Salzsäure als Beizmittel zu beobachten. Das hierbei anfallende Eisen(II)-chlorid ist aufgrund seiner Reinheit besonders zur Herstellung von Eisenoxidgelb geeignet. Weiterhin wird zur Herstellung von Titandioxid weltweit verstärkt das sogenannte Chloridverfahren angewendet. Aus beiden Quellen fallen also verstärkt Eisen(II)-chlorid-haltige Lösungen an, die möglichst zu einem Wertstoff umgearbeitet werden sollen. Ein gängiges Verfahren hierfür ist das Sprühröstverfahren, bei dem das Eisen(II)-chlorid oder Eisen(III)-chlorid bei hohen Temperaturen (typischerweise bei mehr als 1000°C) einer oxidativen Hydrolyse unterworfen wird. Als Endprodukte entstehen hier Eisenoxid, typischerweise Hämtit und Salzsäure, die als gewünschter Wertstoff wieder in den Beizerei-Prozess eingeschleust wird. In der Regel ist das erhaltene Eisenoxid ohne weitere Reinigungsschritte zur Herstellung von Hartferriten (Dauermagnete) geeignet.

Sollen aus derartigen Eisenoxiden leicht magnetisierbare Weichferrite hergestellt werden, so muss die Eisenchloridlösung zusätzlichen Reinigungsoperationen unterworfen werden, welche das Verfahren deutlich verteuern. Da immer mehr Eisenchlorid, großenteils minderer Qualität, angeboten wird, und die Auffnahmefähigkeit des Ferritmarkts begrenzt ist, wird eine Alternative zur Herstellung eines Wertstoffs aus diesen Eisenchloriden gesucht. Eine direkte Deponierung oder Verklappung der Eisenchloridlösungen ist aus ökologischen Gründen nicht möglich.

Generell wird α-FeOOH (Eisenoxidgelb) aus Eisen(II)-Salzen nach dem Fällverfahren, wie z.B. in DE-A 2 455 158 beschrieben, oder nach dem Penniman-Verfahren, wie in US-A-1,368,748 und US-A-1,327,061 beschrieben, hergestellt. Bei beiden Verfahren wird zunächst ein Keim hergestellt, auf den man dann in einem weiten - verhältnismäßig langsamen - Schritt weiteres α-FeOOH aufwachsen lässt. FeCl₂ wird in der Regel, im Gegensatz zu FeSO₄, nicht als kristalliner Stoff isoliert, da es eine deutlich höhere Wasserloslichkeit als FeSO₄ hat. Es ist deshalb vielfach stärker verunreinigt als FeSO₄, was sich bei der Pigmentherstellung als sehr nachteilig erweisen kann.

So ist bekannt, dass viele Eisen(II)-chloridlösungen aus Stahlbeizen bei Anwendung des sogenannten sauren Keimverfahrens nicht zu reinen nadelförmigen α-FeOOH-Keimen führen, siehe hierzu EP-A-0 406 633, Beispiel 1, wo lediglich ein braunes Pulver hergestellt werden konnte. Anstelle des α-FeOOH erhält man vielfach β-FeOOH in Form sehr langer, dünner Nadeln. β-FeOOH zerfällt bei der anschließenden Pigmentbildung, in Abhängigkeit von der verwendeten Temperatur teilweise zu α-Fe₂O₃ (Chambaere, D.G. & De Grave, E.; Phys Chem Minerals; 12, (1985), 176-184). Es ist nicht möglich, β-FeOOH als Keimmaterial zur Hertellung von α-FeOOH-Pigmenten einzusetzen. Um das kostengüngstig erhältliche FeCl₂ aus Stahlbeizen dennoch für die α-FeOOH-Keimherstellung einsetzen zun können, wird es bevorzugt, den Keim nach dem sogenannten alkalischen Verfahren, wie z.B. in US-A-2,558,304 beschrieben, herzustellen. Solche Keime führen jedoch öfters zu Farbwerten, die sich als etwas hell erweisen. Siehe hierzu z.B. EP-A 0 911 370 A1 (=DE 19746263 A1) L*-Werte von 62,0 bis 64,0). Generell wird hier zur Fällung beim Pigmentaufbau ein alkalisches Fällungsmittel eingesetzt. Hier werden üblicherweise NaOH, Na₂CO₃ oder Ammoniak eingesetzt (EP-A 911 370 A1). Überraschenderweise wurde gefunden, dass auch CaCO₃ und/oder Dolomit als Fällungsmittel eingesetzt werden kann, wenn es in feingemahlener Form (Teilchengröße <90 µm) als wässrige Suspension oder als Pulver verwendet wird.

Technische Eisen(II)-chloridlösungen enthalten häufig ferner organische Bestandteile (z.B.Beizerei-Hilfsmittel) und größere Menge höherwertige Kationen wie z.B. Ti, Cr, Al, V und Si, die sich beim Pigmentwachstum störend auswirken können. Letztere könne durch Fällung mit einer alkalischen Komponente abgetrennt werden. Siehe hierzu z.B. EP-A 0 911 370. Die hieraus resultierende Eisenchloridlösung hat einen pH-Wert von 2 bis 4.

Es war daher die Aufgabe der vorliegenden Erfindung, ein Eisenoxidgelbpigment nach dem Fällungsverfahren herzustellen, das dunklere L*-Werte aufweist, und vorzugsweise den Rohstoff Eisen(II)-chlorid verwendet.

Die Erfindung betrifft Eisenoxidpigmente mit L*-, a*- und b*-Werten, gemessen im Purton nach CIELAB-Einheiten von
L*= 58 bis 62, bevorzugt von 60 bis 62,
a* = 7 bis 13, bevorzugt von 9 bis 11 und
b* = 43 bis 40, bevorzugt von 46 bis 50
einem Ca-Gehalt von 10 bis 6.500 mg/kg Eisenoxidpigment, einem Länge-zu-Breite-Verhältnis der Teilchen von 3:1 bis 30:1, bevorzugt von 5:1 bis 20:1, einem isoelektrischen Punkt von 6 bis 9 und einem Anteil an wasserlöslichen Anteilen, bezogen auf das Eisenoxidpigment, von 0,01 bis 2,1 Gew.-%.

Die Erfindung betrifft ferner ein Verfahren zur Herstellung der erfindungsgemäßen Eisenoxidpigmente, dadurch gekennzeichnet, dass:
a. eine wässrige Lösung einer Fe(II)-Komponente mit einer Fe-Konzentration von 55 bis 220 g/l, bevorzugt von 75 bis 150 g/l, bezogen auf die vorgelegte wässrige Lösung, vorgelegt wird,
b. wozu ein α-FeOOH-Gelbkeim zugegeben wird,
c. eine Temperatur von 55° C bis 85 °C, bevorzugt von 60 °C bis 75 °C, eingestellt wird,
d. danach oxidiert wird, um weiteres α-FeOOH zu bilden, wobei
   1) die Temperatur während der Oxidation bei 55 °C bis 85 °C, bevorzugt bei 60 °C bis 75 °C, liegt, und
   2) die Oxidationsgeschwindigkeit bei 0,2 bis 10 Mol.-% gebildetem Fe(III)/h, bevorzugt bei 0,4 bis 4,0 Mol.-% gebildetes Fe(III)/h liegt;
   3) während mit oder gleich nach dem Beginn der Oxidation Calciumcarbonat und/oder Dolomit, bevorzugt in ihren natürlich vorkommenden Formen, als wässrige Suspension, als Pulver oder als Granulat als Fällungsmittel in einer Konzentration von 80 bis 500 g/l bezogen auf die zugesetzte Suspension, zugegeben wird;
   4) der pH-Wert zu Beginn der Oxidation mit einer Geschwindigkeit von 0,05 bis 1,0 pH/h durch kontinuierliche Zugabe des Fällungsmittels bis zum Endpunkt der pH-Steigerung erhöht wird, wobei der Endpunkt der pH-Steigerung bei pH 2,4 bis 5,2, bevorzugt bei pH 2,8 bis 4,2, liegt.

Der Pigmentaufbau erfolgt nach folgender Stöchiometrie:

2 FeCl₂ + 2 CaCO₃ + 1/2 O₂ + H₂O → 2 FeOOH + 2 CaCl₂ + 2 CO₂

bzw.

2 FeSO₄ + 2 CaCO₃ + 1/2 O₂ + H₂O → 2 FeOOH + 2 CaSO₄ + 2 CO₂

Zur Pigmentbildung sind diskontinuierlich betriebene Rührkessel, Reaktoren mit Strahlern (Zweistoffdüsen Flüssigkeit, Gas), Schlaufenreaktoren oder Blasensäulen besonders geeignet.

Zu einer wässrige Lösung der Fe(II)-Komponente mit einem Fe-Gehalt von 55 bis 220 g/l Fe, bevorzugt 75 bis 150 g/l Fe, wird vorzugsweise in 10 bis 120 Minuten der α -FeOOH-Gelbkeim gepumpt. Vorzugsweise wird FeCl₂ als Fe(II)-Komponente eingesetzt. Nach dem Zupumpen des α-FeOOH-Gelbkeims wird vorzugsweise auf die Oxidationstemperatur von 55 °C bis 85 °C, ganz besonders bevorzugt 60 °C bis 75 °C aufgeheizt. Dann wird vorzugsweise mit einer Geschwindigkeit von 0,2 bis 10 Mol.-%/h gebildetes Fe(III), bevorzugt 0,4 bis 4 Mol.-%/h, oxidiert. Bevorzugt wird gleichzeitig das Fällungsmittel in einer Geschwindigkeit zugegeben, so dass der pH-Wert der Suspension um 0,05 bis 1,0 pH-Einheiten pro Stunde steigt. Der pH-Wert wird vorzugsweise mit der angegebenen Geschwindigkeit gesteigert, bis ein pH-Wert von 2,4 bis 5,2, bevorzugt 2,8 bis 4,2 erreicht ist. Ist dieser pH-Wert erreicht, sollte die Oxidation solange fortgesetzt werden, bis kein oder nahezu kein freies Fe(II) mehr vorhanden ist.

Die Oxidation wird vorzugsweise beendet, sobald der Fe(II)-Gehalt in der Suspension kleiner als 1 Mol.-% ist. Eine weitere Oxidation zu 100% Umsetzung ist wirtschaftlich weniger sinnvoll, kann aber durchaus durchgeführt werden. Als Oxidationsmittel wird vorzugsweise Luftsauerstoff, Sauerstoff, Ozon, Als Fällungsmittel wird erfindungsgemäß Kalksteinmehl (CaCO₃) oder Dolomitmehl (CaMg(CO₃)₂ oder MgCO₃*CaCO₃) eingesetzt. Das Fällungsmittel wird vorzugsweise entweder als wässrige Suspension mit einer Konzentration von 80 bis 500 g/l Fällungsmittel oder direkt als Feststoff eingesetzt. Mehl in Sinne der Erfindung bedeutet ein Pulver mit einer Teilchengröße von 0,1 bis 100 µm, wobei die Teilchengröße nach Laserbeugungsmethode bestimmt wurde. Besonders bevorzugt wird Kalkstteinmehl eingesetzt, wobei 90% der Teilchen eine Teilchengröße <45µm aufweisen. Feines Pulver kann auch eingesetzt werden, jedoch ist dann die Konzentration CaCO₃ in der Suspension geringer mit der Folge, dass mehr Wasser in den Prozess eingebracht wird, das dann aufgeheizt werden muss. Grobe Teilchen im Millimeterbereich sind weniger bevorzugt, weil die Auflösung länger dauert.

Je nach gewählten Reaktionsbedingungen erhält man hellere oder dunklere Gelbpigmente. In der folgenden Übessicht sind die wichtigsten Steuerparameter angegeben:

| Parameter | "helles Pigment" | "dunkleres Pigment" |
|---|---|---|
| Keim | fein | grob |
| Temperatur | 55 bis 75°C | 60 bis 85°C |
| End-pH-Bereich | 2,4 bis 3,8 | 3,2 bis 5,2 |
| Oxidation | langsam | schnell |

| | | |
|---|---|---|
| "Helles Pigment" im Sinne der Erfindung bedeutet, dass L* im Bereich von 61 bis 62 liegt. "Dunkles Pigment" im Sinne der Erfindung bedeutet, dass L* kleiner als 61 ist. "Fein" im Sinne der Erfindung bedeutet, dass die BET über 60 m²/g liegt. "Grob" im Sinne der Erfindung bedeutet, dass die BET unter 60 m²/g liegt. "Langsam" im Sinne der Erfindung bedeutet, dass 0,5 bis 1,0 Mol.-% Fe(III)/h entstehen. "Schnell" im Sinne der Erfindung bedeutet, dass mehr als 3,0 Mol.-% Fe(III)/h entstehen. | | |

Bevorzugte Ausführungsform bei der Pigmentherstellung:

| | |
|---|---|
| Fe(II)-Komponente | FeCl₂ als wässrige Lösung |
| Fällungsmittel | CaCO₃, z.B. in Form von Kalksteinmehl aus natürlich vorkommendem Kalkstein |
| Konzentration der Fe(II)-Komponente | 75 bis 150 g/l |
| Temperatur | 60 bis 75 °C |
| pH-Rampe | pH 2,8 bis 4,2 mit 0,05 bis 0,4 pH/h |
| Oxidation | mit Luftsauerstoff, so dass 0,4 bis 4,0 Mol.% Fe(III)/h entstehen |

Der Fachmann wird durch geeignete Variation der angegebenen Herstellungsbedingungen in der Lage sein, eine breite Palette von Eisenoxidgelbpigmenten verschiedener Teilchengrößen und somit verschiedener Farbtöne herzustellen.

Die Aufarbeitung der Pigmentsuspensionen erfolgt durch die bekannten Schritte Filtration, Waschung, Trocknung und Mahlung.

Die Erfindung betrifft auch ein Verfahren zur Herstellung von Eisenoxidpigment, dadurch gekennzeichnet, dass der α-FeOOH-Gelbkeim eine Nadellänge von 0,1 bis 2 µm und ein Länge-zu-Breite-Verhältnis von 30:1 bis 5:1 aufweist, wobei der α -FeOOH-Gelbkeim so hergestellt wird, dass:
a. ein alkalisches Fällungsmittel wie Alkalimetallhydroxide, Alkalimetallcarbonate, Erdalkalimetallhydroxide, Erdalkalimetallcarbonate, Ammoniak, Dolomit sowie Kombinationen davon, in einer Konzentration, bezogen auf die Reaktion der Keimbildung, von 1,25 bis 15 Äquivalenten/l, bevorzugt von 2,5 bis 7,5 Äquivalenten/l, verwendet wird,
b. eine Fe(II)-Komponente mit einer Fe-Konzentration von 21 bis 150 g/l verwendet wird, wobei die Menge an Fe(II)-Komponenten von 29% bis 83% bzw. von 125% bis 500% der Stöchiometrie der alkalischen Fällungsmittel beträgt,
c. entweder das alkalische Fällungsmittel oder die Fe(II)-Komponente vorgelegt und auf eine Temperatur von 30 °C bis 60 °C, bevorzugt von 34 °C bis 47 °C aufgewärmt wird,
d. die nicht vorgelegte Komponente der vorgelegten Komponente nach Erreichen der in Schritt c) bestimmten Temperatur zugesetzt wird,
e. danach oxidiert wird, wobei
   1) die Oxidationsgeschwindigkeit von 5 bis 50 Mol.-% Fe(III)/h, bevorzugt von 15 bis 30 Mol.-% Fe(III)/h, beträgt,
   2) die Fällzeit 15 bis 95 Minuten, bevorzugt 30 bis 55 Minuten beträgt.
Die Keimherstellung erfolgt nach folgender Stöchiometrie:

   2 FeCl₂ + 4 NaOH + ½ O₂ → 2 FeOOH + 4 NaCl + 2 H₂O

   bzw.

   2 FeSO₄ + 4 NaOH + ½ O₂ → 2 FeOOH + 2 Na₂SO₄ + 2 H₂O

Zur Herstellung eines α-FeOOH-Keims werden vorteilhafterweise diskontinuierlich oder kontinuierlich betriebene Rührkessel, Strahlerreaktoren (ohne Rührer), Schlaufenreaktoren oder Rohrreaktoren eingesetzt.

Zu einer Lösung eines alkalischen Fällungsmittels (typischerweise Natronlauge, Natriumcarbonat, Ca(OH)₂ etc.) wird vorzugsweise unter guter Durchmischung eine Fe(II)-Komponente mit einer Konzentration von 21 bis 150 g/l Fe, vorzugsweise 44 bis 132 g/l Fe, innerhalb von 15 bis 95 Minuten, bevorzugt von 30 bis 55 Minuten, zugegeben. Diese Verfahrensweise ergibt bei Verwendung eines Überschusses an alkalischem Fällungsmittel bessere Resultate als die Vorlage der Fe(II)-Komponente. Lediglich bei Ausfällung von 20 bis 80% der Stöchiometrie an Eisen, ergibt die Vorlage der Fe(II)-Komponente bessere Resultate. Der Bereich von 81 bis 120% der Stöchiometrie an alkalischem Fällungsmittel ist weniger bevorzugt, da unter bestimmten Bedingungen (z.B. bei hohen Temperaturen und/oder eine niedrige Oxidationsrate) ggf. unerwünschter schwarzer Magnetit entstehen kann. Die Konzentration der alkalischen Fällungsmittel beträgt von 3 bis 15 Äquivalente pro Liter (bezogen auf die Stöchiometrie der Reaktion der Keimbildung). Die Menge an Fe(II)-Komponenten liegt von 20% bis 83% bzw. von 125% bis 500% der Stöchiometrie der alkalischen Fällungsmittel. Die Fällung erfolgt vorzugsweise bei Temperaturen von 30 °C bis 60 °C, bevorzugt von 34 °C bis 47 °C.

Analog kann auch eine Fe(II)-Komponente vorgelegt und ein alkalisches Fällungsmittel zugegeben werden.

Die anschließende Oxidation erfolgt vorzugsweise mit einer Geschwindigkeit von 5 bis 50 Mol.-% Fe(III)/h, bevorzugt von 15 bis 30 Mol.-% Fe(III)/h. Als Oxidationsmittel wird vorzugsweise Luftsauerstoff, Sauerstoff, Ozon, Wasserstoffperoxid, Chlor, Perchlorate, Natriumhypochlorit, Chlorlauge, Calciumhypochlorit, Chlorate (I) bis (VII) oder Nitrate verwendet werden.

Nachdem alles ausgefällte Fe(II) zu Fe(III) (α-FeOOH) oxidiert worden ist, kann der hergestellte Keim nach Prüfung (Teilchengröße, Teilchenform) ohne weitere Isolierung zur Pigmentherstellung eingesetzt werden.

Bevorzugte Ausführungsform bei der Keimherstellung:
A. Alkalischer Keim, bevorzugt bei Einsatz von FeCl₂ als Fe(II)-Komponente:

| | |
|---|---|
| Fe(II)-Komponente | FeCl₂ als wässrige Lösung |
| Alkalisches Fällungsmittel | NaOH |
| Konzentration der Fe(II)-Komponente | 44 bis 132 g/l Fe |
| Alkalische Fällungsmittelmenge | 150 bis 250% der Stöchiometrie |
| Temperatur | 34 bis 47 °C |
| Oxidationsgeschwindigkeit | 15 bis 30 Mol.-%/h |

B. Saurer Keim, bevorzugt bei Einsatz von FeSO₄ als Fe(II)-Komponente:

| | |
|---|---|
| Fe(II)-Komponente | FeSO₄ als wässrige Lösung |
| Alkalisches Fällungsmittel | NaOH |
| Konzentration der Fe(II]-Komponente | 44 bis 132 g/l Fe |
| Alkalische Fällungsmittelmenge | 20 bis 80% der Stöchiometrie |
| Temperatur | 34 bis 47 °C |
| Oxidationsgeschwindigkeit | 10 bis 30 Mol.-%/h |

Die Erfindung betrifft. auch die Verwendung der oben hergestellten Eisenoxidgelbpigmente in Baustoffen, zum Einfärben von Kunststoffen, Papier oder zur Herstellung von Farbmittelzubereitungen, zur Herstellung von Farbmitteln, Beispielsweise solche die mit Lebensmitteln in Kontakt kommen, zur Herstellung von Dispersionsfarben oder anderen Lacken und Farben, sowie zur Herstellung von heterogenen Katalysatoren, bevorzugt zur Ethylbenzoldehydrierung. Das oben hergestellte Eisenoxidgelbpigment kann ferner zur Herstellung von Eisenoxidrotpigmenten verwendet werden.

Das Eisen(II)-chlorid kann sowohl bei der Keimherstellung als auch bei der Pigmentherstellung teilweise durch Eisen(II)-sulfat oder eine andere kostengünstige Fe(II)-Quelle ersetzt werden. Die bevorzugte Ausführungsform ist jedoch der ausschließliche Einsatz von Eisen(II)-chlorid.

Nachfolgend wird die Erfindung beispielhaft beschrieben, worin jedoch keinerlei Einschränkungen zu sehen sind.

### Beispiele

### Beschreibung der verwendeten Messmethoden

Die Bestimmung des Farbtons im Purton und in der Aufhellung der erhaltenen Teilchen erfolgt wie in EP-B-0911370, Seite 4 Zeile 10 bis Seite 6, Zeile 9, angegeben.

Die Kristallitgröße wurde röntgenographisch am Phillips-Pulverdiffraktometer bestimmt. Zur Bestimmung der Kristallitgröße wird die Halbwertsbreite der 110-Reflex herangezogen.

Das Länge-zu-Breite-Verhältnis der Kristalle wurde durch elektronenmikroskopische Aufnahmen bestimmt.

Die BET-Oberfläche wird nach der sog. 1-Punktmethode nach DIN 66131 bestimmt. Als Gasgemisch werden 90% He und 10% N₂ verwendet, es wird bei -196 °C gemessen. Vor der Messung wird die Probe 60 Minuten bei 140 °C ausgeheizt.

Die Bestimmung des NaOH-Gehalts erfolgte durch acidimetrische Titration. Die Nachweisgrenze der Bestimmungsmethode beträgt 0,1 %.

Die Bestimmung des Ca-Gehalts erfolgte durch ICP. Die Nachweisgrenze der Bestimmungsmethode beträgt 10 µg/kg.

Die Bestimmung der isoelektrischer Punkt erfolgte durch acidimetrische Titration unter gleichzeitiger Messung der Ladung. Der IEP ist der pH-Wert an dem die Ladung 0 ist. Die Nachweisgrenze der Bestimmungsmethode beträgt 0,1 pH.

Die Bestimmung der wasserlöslichen Anteile erfolgte nach DIN-ISO 787 Teil 3. Die Nachweisgrenze der Bestimmungsmethode beträgt 0,01 %.

Die Bestimmung des α-FeOOH-Gehalt erfolgte durch Gravimetrie. Die Nachweisgrenze der Bestimmungsmethode beträgt 0,1 %.

Die Messung des pH-Werts während der Keim- und Pigmentherstellung erfolgte durch Messung mit einer pH-Elektrode und Auswertung des Signals mit einem pH-Meter mit Temperaturkompensation. Die Nachweisgrenze der Bestimmungsmethode beträgt 0,1 pH.

Als Vergleichssubstanz wurde das hochwertige Eisenoxidgelbpigment Bayferrox® 920 der Bayer AG verwendet.

### Beispiel 1

### Herstellung eines alkalischen α-FeOOH-Gelbkeims

In einen 1500-Liter-Reaktor mit mehreren Injektoren zur Begasung wurden als alkalisches Fällungsmittel 2100 mol Natronlauge mit einer Konzentration von 100 g/l gepumpt. Der Reaktor wurde auf 35 °C aufgeheizt, dann wurden innerhalb von 60 min als Fe(II)-Komponente 439 l FeCl₂-Lösung = 450 mol FeCl₂ (FeCl₂: 130 g/l; HCl: 22,2 g/l) zugepumpt. Nach Beendigung der Fällung wurde 170 Minuten mit 10000 Nl/h Luft oxidiert.

Der erhaltene alkalische α-FeOOH-Gelbkeim hatte folgende Eigenschaften:

| | |
|---|---|
| BET-Oberfläche [m²/g] : | 61 |
| röntgenographische Kristallitgröße [nm] : | 14 |
| α-FeOOH-Gehalt [g/l] : | 32,1 |
| NaOH-Gehalt [g/l] : | 32,3 |
| Länge-zu-Breite-Verhältnis | 12 : 1 |

### Beispiel 2

### Herstellung eines sauren α-FeOOH-Gelbkeims

17,2 kg FeSO₄-Lösung mit einem FeSO₄-Gehalt von 2,25 kg FeSO₄ = 14,8 mol FeSO₄ werden als Fe(II)-Komponente in einen Rührkessel mit 30 Liter Inhalt gegeben und auf 30°C erwärmt. Nachdem die gewünschte Temperatur erreicht ist, wird mit 1,96 kg NaOH-Lösung als alkalisches Fällungsmittel mit ingesamt 0,474 kg NaOH = 11,84 mol NaOHV in 30 Minuten gefällt. Anschließend wird mit 88 l/h Luft so lange oxidiert, bis alles gefällte Fe(II) oxidiert ist. Das Ende der Oxidation ist an einem deutlichen Abfall des pH-Werts von 7,8 auf 4 erkennbar. Der Aussfällgrad beträgt 40% (NaOH/2/FeSO₄). Der pH-Wert beträgt am Ende der Oxidation 3,9. Die Oxidationszeit betrug 190 Minuten. Ein derartiger Keim kann unmittelbar zur Herstellung von Eisenoxidgelbpigmenten eingesetzt werden.

Der erhaltene saure α-FeOOH-Gelbkeim hatte folgende Eigenschaften:

| | |
|---|---|
| BET-Oberfläche [m²/g]: | 65 |
| röntgenographische Kristallitgröße [nm]: | 16 |
| α-FeOOH-Gehalt [g/l]: | 31,8 |
| NaOH-Gehalt [g/l] : | 0 |
| Länge-zu-Breite-Verhältnis | 10: 1 |

### Beispiel 3 (erfindungsgemäß)

### Herstellung eines Eisenoxidgelbpigments

In einen 30-Leiter-Rührkessel mit 3-stufigem Kreuzbalkenrührer, Begasung über Begasungsring unterhalb des Rührers, elektrischer Mantelheizung, Mantelkühleung, pH-Messung, Redoxmessung und Temperaturmessung wurden als Fe(II)-Komponente 19 mol FeCl₂ als wässrige Lösung (Fe-Gehalt: 88,1 g/l, HCl-Gehalt: 34,3 g/l) vorgelegt. In 30 Minuten wurde unter ständigem Rühren (Drehzahl 831 l/min) 2766 ml der α-FeOOH-Gelbkeim-Suspension aus Beispiel 1 (= 1,0 mol FeOOH und 2,2 mol NaOH) zugepumpt. Anschließend wurde auf 75 °C aufgeheizt und die Oxidation mit 8 Nl/h Luft gestartet. Sobald 75 °C erreicht waren, wurde als Fällungsmittel eine Suspension aus Kalksteinmehl (Calciumcarbonat-Gehalt: 247 g/l) langsam zugepumpt, so dass die Erhöhung des pH-Werts 0,2 pH-Einheiten/h betrug. Der Endpunkt der pH-Steigerung lag bei pH 3,2. Nach Erreichen dieses Wertes wurde das Zupumpen der Kalksteinmehlsuspension so gesteuert, dass in der Reaktionssuspension trotz der fortgesetzten Oxidation ein pH-Wert von 3,2 +/- 0,2 gehalten werden konnte. Die Dauer der Oxidation betrug 5549 Minuten, so dass sich eine Oxidationsgeschwindigkeit von 1,08 Mol.-% gebildetes Fe(III)/h ergab. Während der Oxidation wurden Proben gezogen, filtriert, gewaschen, getrocknet und deren Farbwerte bestimmt.

| | Purton, L64, absolut und relativ gegen Bayferrox® 920 | | | | | | Aufhellung, L64 relativ gegen Bayferrox® 920 | | |
|---|---|---|---|---|---|---|---|---|---|
| Probe | L* | a* | b* | dL* | da* | db* | FS [%] | da* | db* |
| 3/A | 60,8 | 9,0 | 44,7 | 0,2 | -2,1 | -3,5 | 96 | -0,8 | 0,4 |
| 3/B | 61,0 | 9,5 | 46,1 | 0,4 | -1,6 | -2,1 | 93 | -0,6 | 0,3 |
| 3/C | 60,6 | 10,0 | 47,1 | 0,0 | -1,1 | -1,1 | 94 | -0,3 | -0,8 |
| 3/D | 60,4 | 10,3 | 47,1 | -0,2 | -0,8 | -1,1 | 94 | -0,1 | -0,9 |
| 3/End | 59,7 | 10,9 | 47,4 | -1,1 | -0,2 | -0,8 | 97 | 0,1 | -2,6 |

Das auf diese Weise hergestellte Pigment (Probe 3/End) hatte außerdem folgende Eigenschaften:

| | |
|---|---|
| Ca-Gehalt | 40 mg/kg |
| Länge-zu-Breite-Verhältnis | 10:1 |
| Isoelektrischer Punkt | 7,8 |
| Wasserlösliche Anteile | 0,08 Gew.-% |

### Beispiel 4 (erfindungsgemäß)

### Herstellung eines Eisenoxidgelbpigments

In der unter Beispiel 2 beschriebenen Apparatur wurden als Fe(II)-Komponente 19 mol FeCl₂ als wässrige Lösung (Fe-Gehalt: 88,1 g/l, HCl-Gehalt: 5,0 g/l) vorgelegt. In 30 Minuten wurde unter ständigem Rühren (Drehzahl 831 l/min) 3193 ml einer α-FeOOH-Gelbkeim-Suspension (=1,37 mol FeOOH und 1,7 mol NaOH) zugepumpt. Anschließend wurde auf 75°C aufgeheizt und die Oxidation mit 19 Nl/h Luft gestartet. Sobald 75°C erreicht waren, wurde als Fällungsmittel eine Suspension aus Dolomitmehl (Carbonat-Gehalt: 2,85 mol/l) langsam zugepumpt, so dass die Erhöhung des pH-Werts 0,2 pH-Einheiten/h betrug. Der Endpunkt der pH-Steigerung lag bei pH 3,4. Nach Erreichen dieses pH-Wertes wurde das Zupumpen der Dolomitmehlsuspension so gesteuert, dass in der Reaktionssuspension trotz der fortgesetzten Oxxidation ein pH-Wert von 3,4 +/- 0,2 gehalten werden konnte. Die Dauer der Oxidation betrug 2068 Minuten, so dass sich eine Oxidationsgeschwindigkeit von 2,9 Mol.-% gebildetes Fe(III)/h ergab. Während der Oxidation wurden Proben gezogen, filtriert, gewaschen und getrocknet und deren Farbwerte bestimmt.

| | Purton, L64, absolut und relativ gegen Bayferrox® 920 | | | | | | Aufhellung, L64 relativ gegen Bayferrox® 920 | | |
|---|---|---|---|---|---|---|---|---|---|
| Probe | L* | a* | b* | dL* | da* | db* | FS[%] | da* | db* |
| 4/A | 61,6 | 9,9 | 46,4 | 0,7 | -1,2 | -2,4 | 98 | -0,5 | -1,2 |
| 4/B | 60,9 | 10,2 | 46,2 | -0,1 | -0,9 | -2,6 | 100 | -0,3 | -2,4 |
| 4/End | 60,0 | 10,1 | 45,6 | -0,9 | -1,0 | -3,2 | 105 | -0,5 | -3,5 |

Das auf diese Weise hergestellte Pigment (Probe 4/End) hatte außerdem folgende Eigenschaften:

| | |
|---|---|
| Ca-Gehalt: | 50 mg/kg |
| Länge-zu-Breite-Verhältnis: | 8:1 |
| Isoelektrischer Punkt: | 7,2 |
| Wasserlösliche Anteile | 0,11 Gew.-% |

### Beispiel 5 (erfindungsgemäß)

### Herstellung eines Eisenoxidgelbpigments

In einer, wie im Beispiel 2, beschriebenen Apparatur wurde als Fe(II)-Komponente 11,641 wässrige FeSO₄-Lösung (Fe-Gehalt: 84,1 g/l) worgelegt. Unter ständigem Rühren (Drehzahl 831 l/min) erfolgte die Zugabe von 2906 ml α-FeOOH-Gelbkeim-Suspension, die 30,6 g/l FeOOH (hergestellt nach dem sog. sauren. Keimverfahren mit einem Ausfällungsgrad von 40,5% bezogen auf Fe) und einen Fe(II)-Gehalt von 28,3 g/l besaß, so dass insgesamt 19 mol Fe(II) den Pigmentaufbau zur Verfügung standen.Anschließend wurde auf 70°C aufgeheizt und die Oxidation mit 19 Nl/h Luft gestartet. Sobald 70°C erreicht waren, wurde als Fäillungsmittel eine Suspension aus Kalksteinmehl (Calciumcarbonat-Gehalt: 375 g/l) so zugepumpt, dass die Erhöhung des pH-Wertes 0,2 pH-Einheiten/h betrug. Der Endpunkt der pH-Steigerung lag bei ph 4,2. Nach Erreichen dieses Werts wurde das Zupumpen der Kalksteinmehlsuspension so gestuert, dass in der gesteurt, dass in der Reaktionssuspension trotz der fortgesetzten Oxidation ein pH-Wert von 4,2 +-0,2 gehalten werden konnte. Die Dauer der Oxidation betrug 2725 Minuten, so dass sich eine Oxidationsgeschwindigkeite von 2,2 Mol.-% gebildetes Fe(III)/h ergab. Während der Oxidation wurden Proben gezogen und aufgearbeitet. Die Aufarbeitung umfasst u.a. die Abrennung des bei der Reaktion gebildeten Gipses. Dies kann z.B durdh Auwaschen, Sedimetation oder sämtliche andere technische Verfahren, die zur Fest-Fest-Trennung geeignet sind, erreicht werden. Von den getrockneten Proben wurden die Farbwerte bestimmt.

| | Purton, L64, absolut und relativ gegen Bayferrox® 920 | | | | | | Aufhellung L64 relativ gegen Bayferrox® 920 | | |
|---|---|---|---|---|---|---|---|---|---|
| Probe | L* | a* | b* | dL* | da* | db* | FS [%] | da* | db* |
| 5/A | 61,6 | 8,0 | 44,1 | 0,7 | -3.1 | -4,5 | 90 | -1,2 | 2,1 |
| 5/B | 61,8 | 8,4 | 45,3 | 0,9 | -2,7 | -3,2 | 91 | -1,2 | 1,8 |
| 5/C | 61,8 | 8,8 | 46,46 | 0,9 | -2,3 | -2,0 | 93 | -1,1 | 1,3 |
| 5/D | 61,8 | 9,2 | 47,3 | 0,9 | -1,8 | -1,3 | 94 | -0,9 | 1,3 |
| 5/End | 61,9 | 9,2 | 47,2 | 1,0 | -1,8 | -1,4 | 94 | -0,8 | 1,4 |

Das auf diese Weise hergestellte Pigment (Probe 5/End) hatte außerdem folgende Eigenschaften:

| | |
|---|---|
| Ca-Gehalt: | 30 mg/Kg |
| Länge-zu-Breite-Verhältnis: | 5:1 |
| Isoelektrischer Punkt: | 8,4 |
| Wasserlösliche Anteile: | 0,04 Gew.-% |

### Beispiel 6 (erfindungsgemäß)

### Herstellung eines Eisenoxidgelbpigments

In einer, wie im Beispiel 2, beschriebenen Apparatur wurde als Fe(II)-komponente 11,641 wässrige FeSO₄- Lösung (Fe-Gehalt: 84,1 g/l vorgelegt. Unter ständigem Rühren (Drehzahl 831 1/min) erfolte die Zugabe von 2906 ml α-FeOOH-Gelbkeim-Suspension, die 30,6 FeOOH (hergestellt nach dem sog. sauren Keimverfahren mit einem Ausfällungsgrad von 40,5% bezogen auf Fe) und einen Fe(II)-Gehalt von 28,3 g/l besaß, so dass insgesamt 19 mol Fe(II) für den Pigmentaufbau zur Verfügung standen. Anschließend wurde auf 75°C aufgeheizt und die Oxidation mit 19 Nl/h Luft gestartet. Sobald 75°C errzicht waren, wurde als Fällungsmittel eine suspension aus Kalksteinmel (Calciumcarbonat-Gehalt: 375 g/l) so zugepumpt, dass die Erhöhung des pH-Wertes 0,2 pH-Einheiten/h Steigerung lag bei pH 3,7. Nach Erreichen dieses Werts wurde das Zupumpen der Kalksteinmehlsuspension so gesteuert, dass in der Reaktionssuspension trotz der fortgesetzten Oxidation ein pH-Wert von 3,7 +/- 0,2 g ehalten w erden konnte. D ie Oxidationszeit betrug 4088 Minuten, so dass sich eine Oxidationsgeschwindigkeit von 1,5 Mol.-% gebildetes Fe(III)/h ergab. Während der Oxidation wurden Proben gezogen, aufgearbeitet und von den getrockneten Proben die Farbwerte bestimmt.

| | Purton, L64, absolut und relativ gegen Bayferrox® 920 | | | | | | Aufhellung, L64 relativ gegen Bayferrox® 920 | | |
|---|---|---|---|---|---|---|---|---|---|
| Probe | L* | a* | b* | dL* | da* | db* | FS [%] | da* | db* |
| 6/A | 62,0 | 8,7 | 45,9 | 1,2 | -2,5 | -2,6 | 90 | -1,0 | 2,6 |
| 6/B | 61,7 | 9,5 | 47,0 | 0,8 | -1,6 | -1,5 | 93 | -0,7 | 2,0 |
| 6/C | 61,6 | 9,9 | 47,3 | 0,7 | -1,2 | -1,2 | 96 | -0,5 | 1,5 |
| 6/D | 61,1 | 10,6 | 47,7 | 0,3 | -0,6 | -0,9 | 103 | -0,3 | 0,5 |
| 6/E | 60,6 | 10,9 | 47,5 | -0,2 | -0,2 | -1,0 | 104 | -0,1 | 0,2 |
| 6/F | 60,7 | 11,1 | 47,7 | -0,2 | -0,1 | -0,9 | 103 | -0,0 | 0,3 |
| 6/End | 60,8 | 11,0 | 47,7 | 0,0 | -0,2 | -0,9 | 104 | -0,1 | 0,6 |

Das auf diese Weise hergestellte Pigment (Probe 6/End) hatte außerdem folgende Eigenschaften:

| | |
|---|---|
| Ca-Gehalt | 6200 mg/kg |
| Länge-zu-Breite-Verhältnis | 4:1 |
| Isoelektrischer Punkt | 7,7 |
| Wasserlösliche Anteile | 2,05 Gew.-% |

## Patentansprüche

1. Eisenoxidpigment mit L*-, a*- und b*-Werten, gemessen im Purton nach CIELAB-Einheiten von
L* = 58 bis 62, insbesondere von 60 bis 62,
a* = 7 bis 13, insbesondere von 9 bis 11 und
b* = 43 bis 50, insbesondere von 46 bis 50
einem Ca-Gehalt von 10 bis 6.500 mg/kg Eisenoxidpigment, einem Länge-zu-Breite-Verhältnis der Teilchen von 3:1 bis 30:1, insbesondere von 5:1 bis 20:1, einem isoelektrischen Punkt von 6 bis 9 und einem Anteil an wasserlöslichen Anteilen, bezogen auf das Eisenoxidpigment, von 0,01 bis 2,1 Gew.%.

2. Verfahren zur Herstellung von Eisenoxidpigmente gemäß Anspruch 1, **dadurch gekennzeichnet, dass** eine wässrige Lösung einer Fe(II)-Komponente vorgelegt wird, wozu ein α-FeOOH-Gelbkeim zugegeben wird, danach oxidiert wird, und gleichzeitig mit oder gleich nach dem Beginn der Oxidation Calciumcarbonat und/oder Dolomit, insbesondere in ihren natürlich vorkommenden Formen, als wässrige Suspension, als Pulver oder als Granulat als Fällungsmittels zugegeben wird.

3. Verfahren zur Herstellung von Eisenoxidpigmente gemäß Anspruch 2, **dadurch gekennzeichnet, dass**:
a. eine wässrige Lösung einer Fe(II)-Komponente mit einer Fe-Konzentration von 55 bis 220 g/l, insbesondere von 75 bis 150 g/l, bezogen auf, bezogen auf die vorgelegte wässrige Lösung, vorgelegt wird,
b. wozu ein α-FeOOH-Gelbkeim zugegeben wird,
c. eine Temperatur von 55°C bis 85°C, insbesondere von 60°C bis 75°C, eingestellt wird,
d. danach oxidiert wird, um weiteres α-FeOOH zu bilden, wobei
1) die Temperatur während der Oxidation bei 55°C bis 85°C, insbesondere von 60°C bis 75°C, liegt, und
2) die Oxidationsgeschwindigkeit bei 0,2 bis 10 Mol.-% gebildetes Fe(III)/h, insbesondere bei 0,4 bis 4,0 Mol.-% gebildetes Fe(III)/h liegt;
3) gleichzeitig mit oder gleich nach dem Beginn der Oxidation Calciumcarbonat und/oder Dolomit, insbesondere in ihren natürlich vorkommenden Formen, als wässrige Suspension, als Pulver oder als Granulat als Fällungsmittels in einer Konzentration von 80 bis 500 g/l bezogen auf die zugesetzte Suspension, zugegeben wird,
4) der pH-Wert zu Beginn der Oxidation mit einer Geschwindigkeit von 0,05 bis 1,0 pH/h durch kontinuierliche Zugabe des Fällungsmittels bis zum Endpunkt der pH-Steigerung erhöht wird, wobei der Endpunkt der pH-Steigerung bei pH 2,4 bis 5,2, insbesondere von pH 2,8 bis 4,2, liegt.

4. Verfahren zur Herstellung von Eisenoxidpigment gemäß Anspruch 2, **dadurch gekennzeichnet, dass** der α-FeOOH-Gelbkeim eine Nadellänge von 0,1 bis 2 µm und ein Länge-zu-Breite-Verhältnis von 30:1 bis 5:1 aufweist, wobei der α-FeOOH-Gelbkeim so hergestellt wird, dass entweder ein alkalisches Fällungsmittel wie Alkalimetallhydroxide, Alkalimetallcarbonate, Erdalkalimetall-hydroxide, Erdalkalimetall-carbonate, Ammoniak, Dolomit sowie Kombinationen davon verwendet wird, wobei entweder das alkalische Fällungsmittel vorgelegt und erwärmt wird und die die wässrige Lösung einer Fe(II)-Komponente zugegeben wird und danach oxidiert wird, oder eine wässrige Lösung einer Fe(II)-Komponente vorgelegt und aufgewärmt wird, das alkalische Fällungsmittel der vorgelegten wässrigen Lösung einer Fe(II)-Komponente zugesetzt wird, und danach oxidiert wird.

5. Verfahren zur Herstellung von Eisenoxidpigment gemäß Anspruch 2, **dadurch gekennzeichnet, dass** der α-FeOOH-Gelbkeim eine Nadellänge von 0,1 bis 2 µm und ein Länge-zu-Breite-Verhältnis von 30:1 bis 5:1 aufweist, wobei der α-FeOOH-Gelbkeim so hergestellt wird, dass:
a. ein alkalisches Fällungsmittel wie Alkalimetallhydroxide, Alkalimetallcarbonate, Erdalkalimetallhydroxide, Erdalkalimetall-carbonate, Ammoniak, Dolomit sowie Kombinationen davon, in einer Konzentration, bezogen auf die Reaktion der Keimbildung, von 1,25 bis 15 Äquivalenten/l, bevorzugt von 2,5 bis 7,5 Äquivalenten/l, verwendet wird,
b. eine Fe(II)-Komponente mit einer Fe-Konzentration von 21 bis 150 g/l verwendet wird, wobei die Menge an Fe(II)-Komponenten von 20% bis 83% bzw. von 125% bis 500% der Stöchiometrie des alkalischen Fällungsmittels beträgt,
c. entweder das alkalische Fällungsmittel oder die Fe(II)-Komponente vorgelegt und auf eine Temperatur von 30°C bis 60°C, bevorzugt von 34°C bis 47°C, aufgewärmt wird,
d. die nicht vorgelegte Komponente der vorgelegten Komponente nach Erreichen der in Schritt c) bestimmten Temperatur zugesetzt wird,
e. danach oxidiert wird, wobei
1) die Oxidationsgeschwindigkeit bei 5 bis 50 Mol.-% Fe(III)/h, bevorzugt bei 15 bis 30 Mol.-% Fe(III)/h, beträgt,
2) die Fällzeit 15 bis 95 Minuten, bevorzugt 30 bis 55 Minuten beträgt.

6. Verfahren zur Herstellung von Eisenoxidgelbpigmente gemäß einem der Ansprüche 2 bis 5, **dadurch gekennzeichnet, dass** das Calciumcarbonat in Form von Kalksteinmehl und/oder der Dolomit als Dolomitmehl eingesetzt wird, wobei das Mehl eine mittlere Teilchengröße von 0,1 bis 100 µm, bestimmt nach der Laserbeugungsmethode aufweist.

7. Verfahren zur Erstellung von Eisenoxidgelbpigmente gemäß einem der Ansprüche 2 bis 5, **dadurch gekennzeichnet, dass** das Calciumcarbonat in Form von Kalksteinmehl eingesetzt wird, wobei 90% der Teitchen eine Teiichengröße von <45 µm aufweisen.

8. Verfahren zur Herstellung von Eisenoxidgelbpigmente gemäß einem der Ansprüche 2 bis 7, **dadurch gekennzeichnet, dass** als Oxidationsmittel Luftsauerstoff, Sauerstoff, Ozon, Wasserstoffperoxid, Chlor, Chlorate (I) bis (VII) oder Nitrate verwendet werden.

9. Verwendung von Eisenoxidgelbpigment nach Anspruch 1 sowie die in den Ansprüchen 2 bis 8 hergestellten Eisenoxidgelbpigmente zum Einfärben von Baustoffen.

10. Verwendung vom Eisenoxidgelbpigment nach Anspruch 1 sowie die in den Ansprüchen 2 bis 8 hergestellten Eisenoxidgelbpigmente zum Einfärben von Kunststoffen, Papier oder zur Herstellung von Farbmittelzubereitungen.

11. Verwendung von Eisenoxidgelbpigment nach Anspruch 1 sowie die in den Ansprüchen 2 bis 8 hergestellten Eisenoxidgelbpigmente zur Herstellung von Farbmitteln, die mit Lebensmitteln in Kontakt kommen.

## Claims

1. Iron oxide pigment having L*, a* and b* values, measured in full shade in CIELAB units, of
L* = 58 to 62, especially from 60 to 62,
a* = 7 to 13, especially from 9 to 11, and
b* = 43 to 50, especially from 46 to 50,
a Ca content of from 10 to 6500 mg/kg iron oxide pigment, a particle length to width ratio of from 3:1 to 30:1, especially from 5:1 to 20:1, an isoelectric point of from 6 to 9 and a water-solubles content, based on the iron oxide pigment, of from 0.01 to 2.1% by weight.

2. Process for preparing iron oxide pigments according to Claim 1, **characterized in that** an aqueous solution of an Fe(II) component is introduced as an initial charge, an α-FeOOH yellow nucleus is added, then oxidation is carried out and at the same time as or immediately after the beginning of oxidation calcium carbonate and/or dolomite, in particular in their naturally occurring forms, as an aqueous suspension, as powder or as granules are added as precipitant.

3. Process for preparing iron oxide pigments according to Claim 2, **characterized in that**:
a. an aqueous solution of an Fe(II) component having an Fe concentration of from 55 to 220 g/l, preferably from 75 to 150 g/l, based on, based on the aqueous solution introduced, is introduced as an initial charge,
b. an α-FeOOH yellow nucleus is added,
c. a temperature of from 55°C to 85°C, preferably from 60°C to 75°C, is set,
d. the oxidation is carried out to form further α-FeOOH, where
1) the temperature during oxidation is from 55°C to 85°C, preferably from 60°c to 75°C, and
2) the oxidation rate is from 0.2 to 10 mol% Fe(III) formed/h, preferably from 0.4 to 4.0 mol% Fe(III) formed/h;
3) during or immediately after the beginning of oxidation calcium carbonate and/or dolomite, preferably in their naturally occurring forms, are added as an aqueous suspension, as powder or as granules, as precipitant, in a concentration of from 80 to 500 g/l based on the suspension added;
4) the pH at the beginning of oxidation is raised at a rate of from 0.05 to 1.0 pH/h by continuous addition of the precipitant until the pH rise end point is reached, the pH rise end point being situated at a pH of from 2.4 to 5.2, preferably at a pH of from 2.8 to 4.2.

4. Process for preparing iron oxide pigment according to Claim 2, **characterized in that** the α-FeOOH yellow nucleus has a needle length of from 0.1 to 2 µm and a length to width ratio of from 30:1 to 5:1, the α-FeOOH yellow nucleus being prepared such that either an alkaline precipitant such as alkali metal hydroxides, alkali metal carbonates, alkaline earth metal hydroxides, alkaline earth metal carbonates, ammonia, dolomite and combinations thereof is used where either the alkaline precipitant is introduced as an initial charge and heated and the aqueous solution of an Fe(II) component is added and then oxidation is carried out, or an aqueous solution of an Fe(II) component is introduced as an initial charge and heated, the alkaline precipitant is added to the initial charge aqueous solution of an Fe(II) component, and then oxidation is carried out.

5. Process for preparing iron oxide pigment according to Claim 2, **characterized in that** the α-FeOOH yellow nucleus has a needle length of from 0.1 to 2 µm and a length to width ratio of from 30:1 to 5:1, the α-FeOOH yellow nucleus being prepared such that:
a. an alkaline precipitant such as alkali metal hydroxides, alkali metal carbonates, alkaline earth metal hydroxides, alkaline earth metal carbonates, ammonia, dolomite and combinations thereof is used in a concentration, based on the nucleus-forming reaction, of from 1.25 to 15 equivalents/l, preferably from 2.5 to 7.5 equivalents/l,
b. an Fe(II) component having an Fe concentration of from 21 to 150 g/l is used, the amount of Fe(II) components being from 20% to 83% or from 125% to 500% of the stoichiometry of the alkaline precipitant,
c. either the alkaline precipitant or the Fe(II) component is introduced as initial charge and heated to a temperature of from 30°C to 60°C, preferably from 34°C to 47°C,
d. the component not introduced initially is added to the initial charge component after the temperature determined in step c) is reached,
e. then oxidation is carried out, where
1) the oxidation rate is from 5 to 50 mol% Fe(III)/h, preferably from 15 to 30 mol% Fe(III)/h,
2) the precipitation time is from 15 to 95 minutes, preferably from 30 to 55 minutes.

6. Process for preparing yellow iron oxide pigments according to one of Claims 2 to 5, **characterized in that** the calcium carbonate is used in the form of ground limestone and/or the dolomite is used as ground dolomite, the ground material having an average particle size of from 0.1 to 100 µm, determined by the laser diffraction method.

7. Process for preparing yellow iron oxide pigments according to one of Claims 2 to 5, **characterized in that** the calcium carbonate is used in the form of ground limestone where 90% of the particles have a size of <45 µm.

8. Process for preparing yellow iron oxide pigments according to one of Claims 2 to 7, **characterized in that** atmospheric oxygen, oxygen, ozone, hydrogen peroxide, chlorine, chlorates (I) to (VII) or nitrates are used as oxidizing agents.

9. Use of yellow iron oxide pigment according to Claim 1 and also the yellow iron oxide pigments prepared in Claims 2 to 8 for colouring building materials.

10. Use of yellow iron oxide pigment according to Claim 1 and also the yellow iron oxide pigments prepared in Claims 2 to 8 for colouring plastics or paper or for preparing colorant preparations.

11. Use of yellow iron oxide pigment according to Claim 1 and also the yellow iron oxide pigments prepared in Claims 2 to 8 for preparing colorants which come into contact with foods.

## Revendications

1. Pigment d'oxyde de fer présentant des valeurs L*, a* et b*, mesurées dans le ton pur selon des unités CIELAB
L* = de 58 à 62, en particulier de 60 à 62,
a* = de 7 à 13, en particulier de 9 à 11 et
b* = de 43 à 50, en particulier de 46 à 50,
une teneur en Ca de 10 à 6,500 mg/kg de pigment d'oxyde de fer, un rapport longueur-à-largeur des particules de 3:1 à 30:1, en particulier de 5:1 à 20:1, un point isoélectrique 6 à 9 et une proportion de proportions solubles dans l'eau, par rapport au pigment d'oxyde de fer, de 0,01 à 2,1% en poids.

2. Procédé pour la production de pigments d'oxyde de fer selon la revendication 1, **caractérisé en ce qu'**on dispose au préalable une solution aqueuse d'un composant de Fe(II), à laquelle on ajoute un germe jaune d'α-FeOOH, puis on oxyde et on ajoute, simultanément à l'oxydation ou juste après le début de l'oxydation, du carbonate de calcium et/ou de la dolomite, en particulier sous leurs formes naturelles, sous forme de suspension aqueuse, de poudre ou de granulat, comme agent de précipitation.

3. Procédé pour la production de pigments d'oxyde de fer selon la revendication 2, **caractérisé en ce que**
a. on dispose au préalable une solution aqueuse d'un composant de Fe(II) présentant une concentration en Fe de 55 à 220 g/l, en particulier de 75 à 150 g/l, par rapport à la solution aqueuse disposée au préalable,
b. on y ajoute un germe jaune d'α-FeOOH,
c. on règle une température de 55°C à 85°C, en particulier de 60°C à 75°C,
d. puis on oxyde, pour former de l'α-FeOOH supplémentaire, où
1) la température pendant l'oxydation est située à 55°C jusqu'à 85°C, en particulier à 60°C jusqu'à 75°C, et
2) la vitesse d'oxydation est située à 0,2 jusqu'à 10% en mole de Fe(III) formé/h, en particulier à 0,4 jusqu'à 4,0% en mole de Fe(III) formé/h ;
3) on ajoute, simultanément à l'oxydation ou juste après le début de l'oxydation, du carbonate de calcium et/ou de la dolomite, en particulier sous leurs formes naturelles, sous forme de suspension aqueuse, de poudre ou de granulat, comme agent de précipitation à une concentration de 80 à 500 g/l par rapport à la suspension ajoutée,
4) on augmente le pH au début de l'oxydation à une vitesse de 0,05 à 1,0 pH/h par addition continue de l'agent de précipitation jusqu'au point final de l'augmentation du pH, le point final de l'augmentation du pH étant situé à pH 2,4 jusqu'à 5,2, en particulier à pH 2,8 jusqu'à 4,2.

4. Procédé pour la préparation de pigment d'oxyde de fer selon la revendication 2, **caractérisé en ce que** le germe jaune d'α-FeOOH présente une longueur d'aiguille de 0,1 à 2 µm et un rapport longueur-à-largeur de 30:1 à 5:1, le germe jaune d'α-FeOOH étant préparé **en ce qu'**on utilise soit un agent de précipitation alcalin, tel que les hydroxydes de métal alcalin, les carbonates de métal alcalin, les hydroxydes de métal alcalino-terreux, les carbonates de métal alcalino-terreux, l'ammoniaque, la dolomite, soit des combinaisons de ceux-ci, soit en disposant au préalable l'agent de précipitation alcalin et en le chauffant et en ajoutant la solution aqueuse d'un composant de Fe(II) puis en oxydant, soit en disposant au préalable une solution aqueuse d'un composant de Fe(II) et en chauffant, en ajoutant l'agent de précipitation alcalin à la solution aqueuse disposée au préalable d'un composant de Fe(II) puis en oxydant.

5. Procédé pour la préparation de pigment d'oxyde de fer selon la revendication 2, **caractérisé en ce que** le germe jaune d'α-FeOOH présente une longueur d'aiguille de 0,1 à 2 µm et un rapport longueur-à-largeur de 30:1 à 5:1, le germe jaune d'α-FeOOH étant préparé **en ce que**
a. on utilise un agent de précipitation alcalin, tel que les hydroxydes de métal alcalin, les carbonates de métal alcalin, les hydroxydes de métal alcalino-terreux, les carbonates de métal alcalino-terreux, l'ammoniaque, la dolomite ainsi que leurs combinaisons, en une concentration, par rapport à la réaction de formation de germes, de 1,25 à 15 équivalents/l, de préférence de 2,5 à 7,5 équivalents/l,
b. on utilise un composant de Fe(II) présentant une concentration en Fe de 21 à 150 g/l, la quantité de composant de Fe(II) étant de 20% à 83% ou de 125% à 500% de la stoechiométrie de l'agent de précipitation alcalin,
c. on dispose au préalable soit l'agent de précipitation alcalin, soit le composant de Fe(II) et on chauffe à une température de 30°C à 60°C, de préférence de 34°C à 47°C,
d. on ajoute le composant non disposé au préalable au composant disposé au préalable après avoir atteint la température déterminée dans l'étape c),
e. puis on oxyde,
1) la vitesse d'oxydation étant de 5 à 50% en mole de Fe(III)/h, de préférence de 15 à 30% en mole de Fe(III)/h,
2) le temps de précipitation étant de 15 à 95 min, de préférence de 30 à 55 min.

6. Procédé pour la préparation de pigments jaunes d'oxyde de fer selon l'une quelconque des revendications 2 à 5, **caractérisé en ce que** le carbonate de calcium est utilisé sous forme de farine de pierre calcaire et/ou la dolomite est utilisée sous forme de farine de dolomite, la farine présentant une grosseur moyenne de particule de 0,1 à 100 µm, déterminée selon le procédé par diffraction au laser.

7. Procédé pour la préparation de pigments jaunes d'oxyde de fer selon l'une quelconque des revendications 2 à 5, **caractérisé en ce que** le carbonate de calcium est utilisé sous forme de farine de pierre calcaire, 90% des particules présentant une grosseur de particule < 45 µm.

8. Procédé pour la préparation de pigments jaunes d'oxyde de fer selon l'une quelconque des revendications 2 à 7, **caractérisé en ce qu'**on utilise, comme oxydant, l'oxygène de l'air, l'oxygène, l'ozone, le peroxyde d'hydrogène, le chlore, les chlorates (I) à (VII) ou les nitrates.

9. Utilisation de pigment jaune d'oxyde de fer selon la revendication 1 ainsi que des pigments jaunes d'oxyde de fer préparés dans les revendications 2 à 8 pour la coloration de matériaux de construction.

10. Utilisation de pigment jaune d'oxyde de fer selon la revendication 1 ainsi que des pigments jaunes d'oxyde de fer préparés dans les revendications 2 à 8 pour la coloration de matériaux synthétiques, de papier ou pour la préparation de compositions de colorants.

11. Utilisation de pigment jaune d'oxyde de fer selon la revendication 1 ainsi que des pigments jaunes d'oxyde de fer préparés dans les revendications 2 à 8 pour la préparation de colorants qui entrent en contact avec des aliments.
